# EUROPEAN PATENT APPLICATION

(11) **EP 4 778 860 A1**
(43) Date of publication of application: **22.07.2026**
(21) Application number: 26153795.5
(22) Date of filing: 23.01.2026
(51) Int. Cl.: B65G 17/24, B07C 5/342, B07C 5/36, B65G 47/40, B65G 47/96

(54) **CONVEYOR FOR TRANSFERRING AND CATEGORIZING FRUIT**

(30) Priority: 20.01.2025 PL 45100725
(71) Applicant: Green Sort Spolka z Ograniczona Odpowiedzialnoscia, 21-505 Janów Podlaski (PL)
(72) Inventor: Stefaniuk, Tomasz, 21-543 Konstantynów (PL)
(74) Representative: Belz, Anna

(57) **Abstract**

The invention solves the problem of designing a conveyor for transporting and categorizing fruit, which will enable the device to be more efficient by achieving increased conveyor speed during fruit transfer. A conveyor for conveying and categorizing fruit according to the invention, comprising at least one roller belt (1) equipped with rollers (3) and a tray belt (2) equipped with trays (4) attached to chains (5) located on both sides of the tray belt (2) and driven by a toothed wheel (18), which belts (1) and (2) are coupled to each other partly along their length, a first camera (20a), a second camera (20b) located above the conveyor, a strain gauge beam (22) under the tray belt (2), a first (31) light source located above the rollers (3) and a second light source (21) located under the trays (4) of the tray belt (2) outside the roller belt (1), characterized in that each tray (4) of the tray belt (2) is a basket (9) with a recess (11) and two pins (8) located oppositely on the outer side shorter sides of the basket (9), which basket (9) has a flat bottom and is situated on two parallel rockers (6) in the form of strips having at one end a sleeve (7) for the pin (8) of the basket (9) and at the other end a pin (10), and on at least one of the rockers (6) of the tray (4) on the side of the sleeve (7) a pin (14) is attached. The rockers (6) are attached in a pivoting manner to the chains (5) of the tray belt (2) by means of the pins (10) of the rockers (6), and the recess (11) of the basket (9) has cutouts (12) for the rollers (3), and in the bottom of the recess (11) there is an opening (13). The tray belt (2) has at least one guide (15) on which the pins (14) of the rockers (6) are slidably supported, keeping the trays (4) in a horizontal position, furthermore the guide (15) at the fruit dropping point has a latch (16) equipped with a slat (16c) being an extension of the guide (15) sliding along its shorter side and an electromagnetic lock (23), furthermore a ramp (17) is attached to the guide (15), under which the feeder (19) is located.

## Description

The subject of the invention is a conveyor for transporting and categorizing fruit, in particular apples.

WO2013131141 describes a fruit conveying and categorization line featuring interlocking roller and pincer conveyors. The roller conveyor is engaged only during fruit inspection, causing the fruit to rotate on the pincers. Later, the fruit is transported solely on the pincers. In the conveyor's engagement zone, the fruit is rotated by the rollers, allowing a camera positioned above it to categorize the fruit from all sides. Fruit is discharged from the pincers (trays) by tilting them laterally, as the rollers engage a guide ledge.

European invention EP2389331 is also known and shows interlocking roller and pincer conveyors, where the trays of the pincer conveyor have two fruit-holding pincers which swing to the sides of the conveyor to drop the fruit.

A disadvantage of solutions known from prior art is that when the fruit on the tray is ejected sideways, in addition to the linear velocity of the conveyor, a velocity perpendicular to the tray conveyor is applied. This means that the resulting velocity of the fruit is greater than the velocity at which the fruit was moving on the tray conveyor. Higher velocity translates into greater forces and greater susceptibility to impact. The machine's performance is limited by the speed of delicate fruit, such as apples, as increasing the fruit's velocity will cause the machine to damage the fruit by bruising it.

The invention solves the problem of designing a conveyor for conveying and categorizing fruit, which will enable the efficiency of the device to be increased by obtaining an increased conveyor speed when conveying fruit.

The fruit conveyor and sorting system according to the invention comprises conveyor belts: at least one roller belt equipped with rollers and at least one tray belt equipped with trays attached to chains positioned on either side and driven by a sprocket. Both belts are interconnected along their lengths. The conveyor is equipped with a first camera and a second camera, both positioned above the conveyor, a strain gauge beam, a light source positioned above the roller belt, and a light source positioned below the tray belt trays outside the roller belt. The conveyor is characterized in that each belt tray is a basket with a recess and two pins located opposite each other on the outer side of the shorter sides of the basket. The basket has a flat bottom and is supported by two parallel slat-shaped rockers with a bushing for the basket pin at one end and a pin at the other. A pin is mounted on at least one of the tray rockers, on the bushing side. The rockers are pivotally attached to the tray belt chains using rocker pins. The basket recess has cutouts for the belt rollers, and an opening is located in the bottom of the recess. The tray belt has at least one guide on which the rocker pins are slidably supported, keeping the trays in a horizontal position. At the place where the fruits are discharged the guide has a latch equipped with a sliding strip along its shorter side, which is an extension of the guide, and an electromagnetic lock. A ramp is attached to the guide, under which the feeder is located. The first camera, the second camera, the electromagnetic latch lock, and the a strain gauge beam are connected to the control system.

Preferably, the conveyor has two guides positioned symmetrically on both sides of the tray belt.

Preferably, in the case of multiple tray and roller belts, the chain is shared by adjacent tray belts.

Preferably, the fruit collection point is a belt conveyor.

Preferably, the light source is LEDs.

Preferably, the light source is broad-spectrum halogen lamps, and the camera is equipped with narrowband filters.

Preferably, the camera in the fruit rotation zone operates in the visible light spectrum, infrared light spectrum, or a combination of both.

Preferably, the latch has two equal-length slats, the front slat having a tooth on the tray belt side, and the rear slat having a tooth on the opposite side. Both slats are attached to the ends of the profiles, which are equipped with a hinge attached to a rigid frame so that the front and rear profiles can pivot towards the longer sides of the slats. The lower part of the profile has a lock attached to the rigid frame on the outside of the tray belt. Furthermore, the front profile is equipped with an electromagnetic lock attached to the rigid frame below the tray belt, and the rear profile is equipped with a spring attached to the frame below the tray belt.

In the currently used conveyors, the fruit is ejected from the tray to the side. This causes it to accelerate perpendicularly to the tray conveyor, in addition to the linear velocity of the conveyor. This means that the fruit's resulting velocity is greater than the velocity at which it moved on the tray conveyor. Higher speeds potentially translate into greater forces and greater susceptibility to impact. The line's efficiency is limited by the speed of delicate fruit, such as apples, as excessive speeds can lead to their destruction.

The conveyor according to the invention, due to it's design, allows fruit to be discharged downward rather than sideways. The tilting trays prevent angular movement, which means the fruit is ejected slower than the tray conveyor. This means that significantly increasing the conveyor speed does not damage the conveyed fruit, drastically increasing the machine's efficiency. The use of a one- or two-part ratchet controlled by an electromagnetic lock allows for a faster start of the closing process and changes in the direction of the tray movement, allowing for a denser arrangement of trays on the tray belt, thus increasing the machine's efficiency. The use of rockers in the trays also improves tray weighing accuracy, as the slight play in the vertical axis prevents vertical forces from the chain on the weighed tray, which would otherwise result from the machine's construction precision, as well as wear and tear due to wear and tear caused by the variable vertical distance between the chain and the strain gauge beam. This effect, combined with a precise visual image of the fruit from all sides obtained through rotation on the roller belt and spectrometric analysis, allows for the collection of precise data about the fruit and its transmission to the control device. The control device can operate the pawls according to the received data, achieving precise fruit selection according to the set parameters. The device according to the invention not only speeds up the fruit selection process but also makes it more accurate.

The conveyor for conveying and sorting fruit according to the invention is shown in the drawings, where:

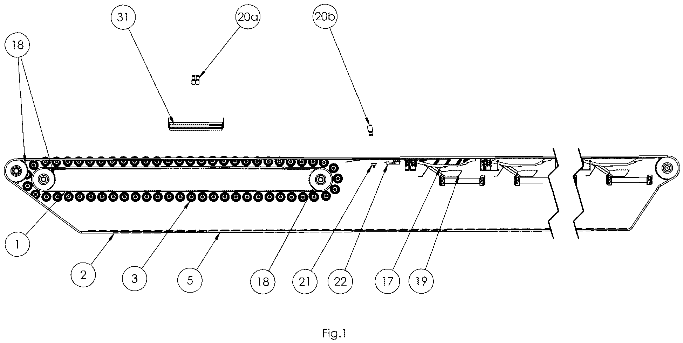

Fig. 1 shows a schematic side view of the conveyor.

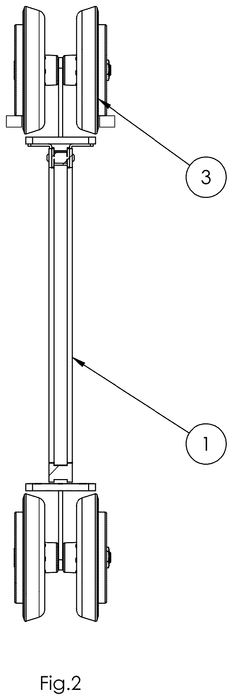

Fig. 2 shows the rollers of the roller belt in a front view.

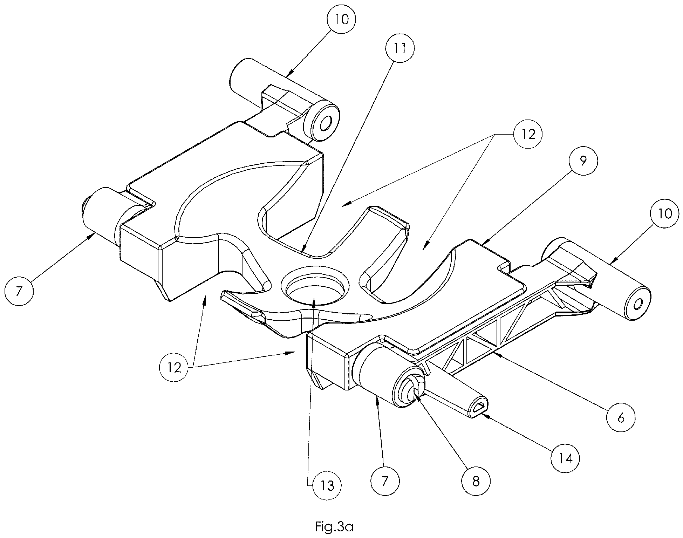

Fig. 3a shows the tray of the tray belt in a perspective view.

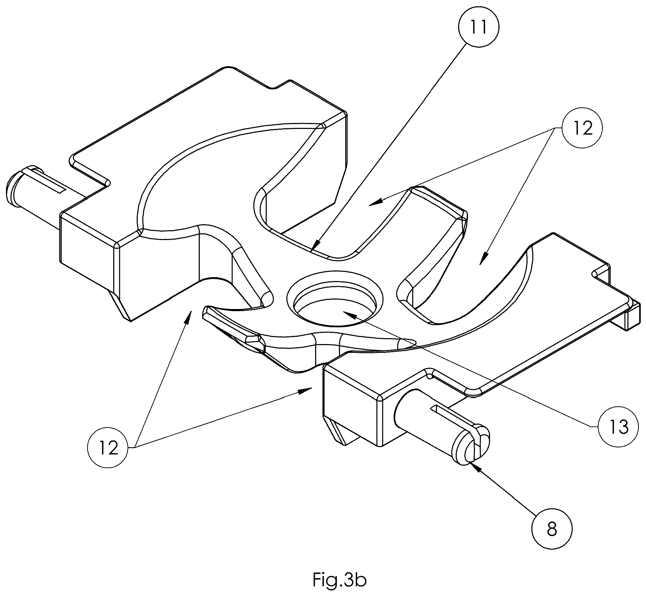

Fig. 3b shows the tray basket in a perspective view.

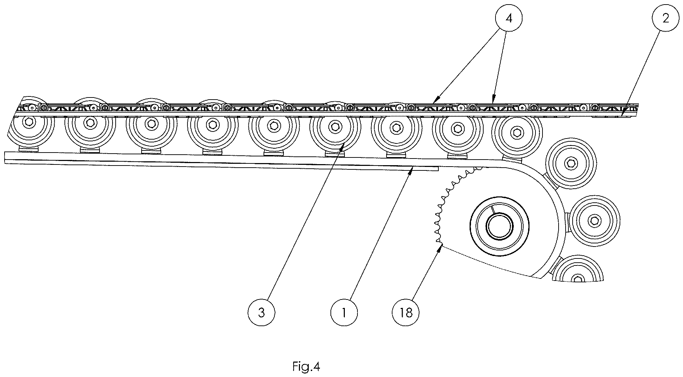

Fig. 4 shows the engagement point of the roller belt and the tray belt.

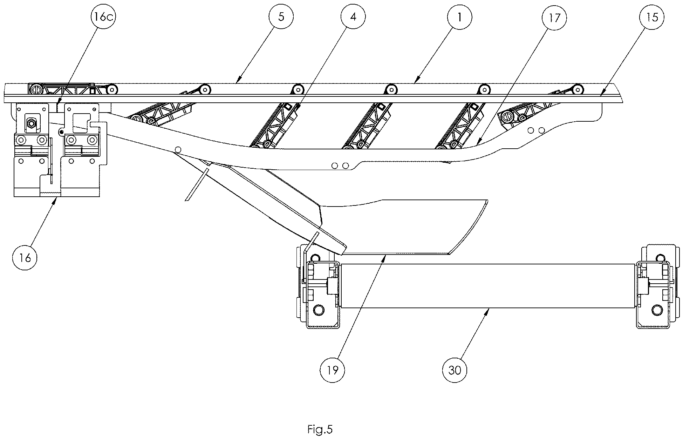

Fig. 5 shows a side view of the part of the conveyor where the latches and ramp are located.

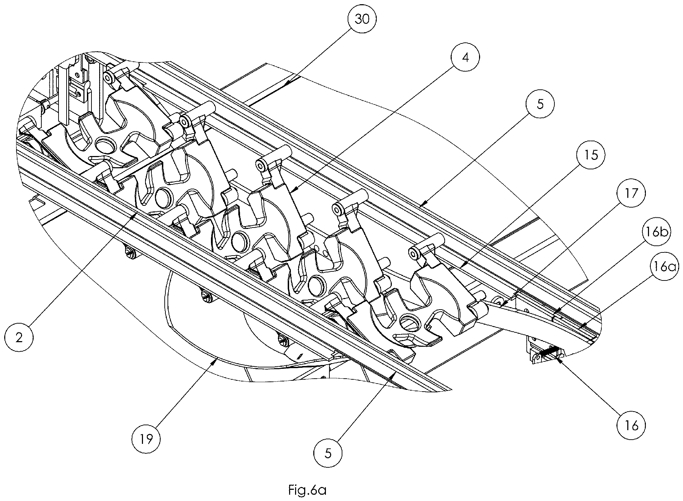

Fig. 6a shows a perspective view of the part of the conveyor where the latches and ramp are located.

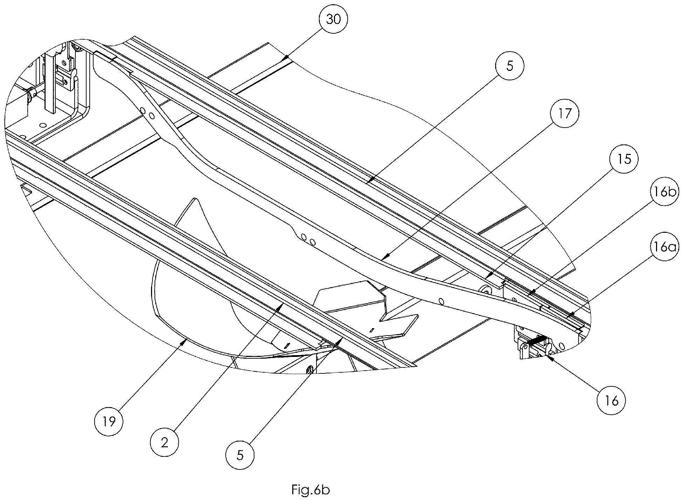

Fig. 6b shows a perspective view of the part of the conveyor where the latches and ramp are located without the trays.
Fig. 7a shows a perspective view of a latch with two slats.
Fig. 7b shows a perspective view of a latch with one slat.

### Example

The fruit conveyor for conveying and sorting according to the invention, in exemplary embodiment, consists of a connected two-tray fruit belt that connects to a parallel one-roller belt. The two-tray fruit belt and the one-roller belt form separate, closed loops around gears 18. The gears 18 are driven by electric motors and move at the same speed. The tray belt 2 consists of two chains 5 between which the tilting trays 4 are placed. Each tray 4 consists of two parallel rockers 6 attached in a tilting manner to the chains 5 of the tray belt 2 by means of inseparable pins 10 placed at their front. On the opposite side of the rocker 6 there is a sleeve 7 for the expansion pin 8 of the basket 9 of the tray 4, which fastens the rocker 6 to the basket 9 of the tray 4. The basket 9 of the tray rests on the rockers 6 and has a recess 11 in the middle. Inside the recess 11 of the tray basket 9, at the front and rear, there are cutouts 12 corresponding to the shape of the rollers 3 of the roller belt 1, while at the bottom of the recess 11 there is an opening 13. The bottom of the tray 4 is profiled so as to be flat, so that the tray 4 is stable when passing over the strain gauge beam 22. On at least one of the rockers 6 of each tray 4, on the side of the sleeve 7, a pin 14 is inseparably placed. The trays 4 have a concave shape so that the fruit does not fall out of the tray.

The tray belt 2 and the roller belt 1 are parallel to each other so that the roller belt 1 is located between the chains 5 of the tray belt 2 and is coupled to it in such a way that the rollers 3 are positioned inside the cutouts 12 of the recess 11 of the basket 9 of the tray 4, which means that the belts 1 and 2 can move freely in the zone in which they are parallel to each other, and the fruits located on the rotating rollers 3 of the roller belt 1 protruding above the trays are rotated.

Where conveyor belts 1 and 2 are engaged, a first camera 20a is positioned above the conveyor along with a light source 31. Camera 20a reads the image reflected from the fruit, which is illuminated by a light source in the form of a diode lamp 31, positioned above the rollers 3 of roller belt 1.

The first camera 20a is used to assess the external quality of fruit illuminated by a first light source in the form of a diode lamp 31 on a conveyor, which fruit is rotated by rollers 3 of roller belt 1 in the section where tray belt 2 and roller belt 1 are coupled. When rollers 3 are retracted downward, the fruit is transferred to trays 4 of tray belt 2. The fruit is then transferred to tray belt 2 and enters the fruit screening and weighing section. Tray 4 of tray belt 2 is constructed in such a way that it has an opening 13 in the center through which light enters the fruit, emitting light from a second light source in the form of a diode lamp 21, which is located in the screening section under tray belt 2. Above the light source 21 and above tray belt 2, there is a second camera 20b directed at tray belt 2. As the fruit, riding on tray 4 on a tray belt 2, passes over the light source 21 that scans the fruit, a second camera 20b scans the image of the scanned fruit and detects internal damage to the fruit and its chemical composition, depending on the wavelength of light used to scan the fruit. The fruit on tray 4 then passes through the weighing section. Tray 4 is gently lifted by rockers 6, which can be adjusted for vertical movement, so that the tray 4 is stabilized and its bottom rests on a strain gauge beam 22, beneath the tray belt 2, which determines the fruit's weight. The bottom of tray 4 is flat so that the tray 4 remains stable while passing over the strain gauge beam 22.

Based on data from cameras 20a and 20b and the strain gauge beam 22, the fruit is classified by the control system computer containing the vision system computer and the signal output module controlling the opening of electromagnetic locks 23 attached to the guide 15, which cause the opening and closing of the latch 16 slats 16a and 16b.

Along the length of the tray belt 2 there is a stationary guide 15 on which the trays 4 rest during belt operation by means of pins 14 placed on the side of the rocker 6 of each tray 4. In the drop zone, i.e. in the part of the conveyor where the roller belt 1 does not engage with the tray belt 2, outside the screening and weighing section, the guide 15 is interrupted by front slats 16a and rear slats 16b of the latch 16 sliding along their shorter side. Below the front slats 16a and rear slats 16b of the latch 16, angle brackets 27 are mounted, constituting the frame of the latch mechanism 16. One of the arms of the angle bracket 27 is placed parallel to the plane of the tray belt 2, while the other is placed perpendicular to it. The front latch slat 16a has a tooth 24a on the side of the tray belt 2, while the rear slat 16b has a tooth 24b on the opposite side. Hinges 26 are attached to the vertical arm of the angle bracket, to which the pivoting profiles 25a and 25b are in turn attached. Latch slats 16a and 16b are attached to the ends of the profiles 25a and 25b. Profiles 25a and 25b are pivotable towards the longer sides of the slats 16a and 16b of latch 16. In the lower part, the profiles 25a and 25b overlap the vertical arm of the angle bracket 27 on the side of the tray belt 2, which provides a unilateral blockade against the pivoting of the profiles 25a and 25b. On the surface of the angle arm 27, parallel to the plane of the tray belt 2, a magnetic lock 23 connected to the control system is mounted so that it cooperates with the front profile 25a. Next to the lock 23, a spring 29 is mounted, the other side of which is attached to the lower end of the rear profile 25b.

In the case when the slats 16a and 16b are in the closed position, the latches 16 constitute an extension of the guide 15 of the tray belt 2 and direct the pins 14 of the rocker 6 of the tray 4 above the fruit dropping zone without tilting them.

During the movement of trays 4 on the tray belt 2, in the case of open slats 16a and 16b, the latches 16, the pins 14 of the tray 4 rockers 6, riding on the diagonal ramp 17, lower the tray 4 so that it begins to rotate downward. Then, the pin 14 of the tray 4, after leaving the diagonal part, enters the horizontal part. The change in the direction of the movement speed resulting from the change of the pin 14 from the diagonal ramp 17 to the horizontal ramp, creates a reaction force of the fruit on the tray, which causes the fruit to have a velocity component opposite to the direction of the fruit's movement and, consequently, slows down the fruit's movement speed relative to the speed of the tray belt 2. The slowed fruit falls onto the inclined, rounded feeder 19 and then, thanks to its rounded shape, is directed onto the receiving conveyor 30. The rounded shape of the feeder 19 allows the direction of fruit movement to be changed from longitudinal to the tray belt 2 to perpendicular to the tray belt 2 and parallel to the moving receiving conveyor 30.

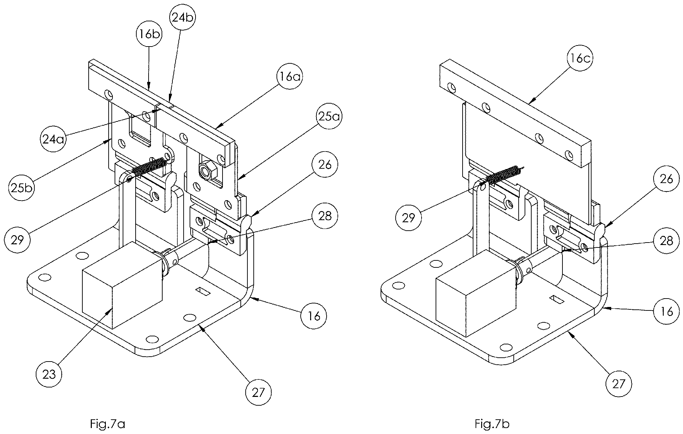

Fig. 7b shows the form of the latch 16 with the slat 16c (without the slats 16a and 16b).

List of symbols in the figures:
1 - roller belt
2 - tray belt
3 - roller belt roller
4 - tray belt tray
5 - tray belt chain
6 - tray rocker
7 - rocker bushing
8 - tray basket pin
9 - tray basket
10 - rocker pin
11 - basket recess
12 - basket cutouts
13 - hole in the basket bottom
14 - rocker pin
15 - tray belt guide
16 - latch
16a - front slat of latch 16
16b - rear slat of latch 16
16c - slat of latch 16
17 - diagonal ramp
18 - gear
19 - feeder
20a - first camera
20b - second camera
21 - second light source
22 - strain gauge beam
23 - electromagnetic lock
24a - front latch slat tooth
24b - rear latch slat tooth
25a - front slat profile
25b - rear slat profile
26 - latch profile hinge
27 - latch mechanism frame in the form of an angle bracket
28 - latch profile lock
29 - spring
30 - receiving conveyor
31 - first light source

## Claims

1. A conveyor for conveying and categorizing fruit according to the invention, comprising at least one roller belt (1) equipped with rollers (3) and a tray belt (2) equipped with trays (4) attached to chains (5) located on both sides of the tray belt (2) and driven by a toothed wheel (18), which belts (1) and (2) are coupled to each other partly along their length, a first camera (20a), a second camera (20b) located above the conveyor, a strain gauge beam (22) under the tray belt (2), a first (31) light source located above the rollers (3) and a second light source (21) located under the trays (4) of the tray belt (2) outside the roller belt (1), **characterized in that** each tray (4) of the tray belt (2) is a basket (9) with a recess (11) and two pins (8) located opposite each other on the outer side shorter sides of the basket (9), which basket (9) has a flat bottom and is situated on two parallel rockers (6) in the form of strips having at one end a sleeve (7) for the pin (8) of the basket (9) and at the other end a pin (10), and on at least one of the rockers (6) of the tray (4) on the side of the sleeve (7) a pin (14) is attached, furthermore the rockers (6) are mounted in a pivotable manner to the chains (5) of the tray belt (2) by means of the pins (10) of the rockers (6), wherein the recess (11) of the basket (9) has cutouts (12) for the rollers (3), and in the bottom of the recess (11) there is an opening (13), and the tray belt (2) has at least one guide (15) on which the pins (14) of the rockers (6) are slidably supported, keeping the trays (4) in a horizontal position, furthermore the guide (15) in at the fruit dropping point it has a latch (16) equipped with a slat (16c) which is an extension of the guide (15) and is slidable along its shorter side and an electromagnetic lock (23), in addition to the guide (15) there is a ramp (17) attached, under which a feeder (19) is located, and the first camera (20a), the second camera (20b), the strain gauge beam (22) and the electromagnetic lock (23) of latch (16) are connected to the control system.

2. The conveyor according to claim 1, **characterized in that** it has two guides (15) placed symmetrically on both sides of the tray belt (2).

3. A conveyor according to claim 1, **characterized in that** in the case of multiple tray belts (2) and roller belts (1), the chain (5) is common to adjacent tray belts (2).

4. Conveyor according to claim 1, **characterized in that** the fruit collection point is a belt conveyor (30).

5. The conveyor according to claim 1, **characterized in that** the first light source (21) and the second light source (31) are diodes.

6. The conveyor according to claim 1, **characterized in that** the first light source (21) and the second light source (31) are broad-spectrum halogens, and the cameras (20a) and (20b) are equipped with narrow-band filters.

7. A conveyor according to claim 1, **characterized in that** the cameras (20a) and (20b) in the fruit rotation zone may be in the visible light spectrum, in the infrared spectrum or a combination of both.

8. A conveyor according to claim 1, **characterized in that** the latch (16) slat (16c) has two slats of equal length: a front slat (16a) and a rear slat (16b), of which the front slat (16a) has a tooth (24a) on the side of the tray belt (2), and the rear slat (16b) has a tooth (24b) on the opposite side, wherein both slats (16a and 16b) are attached to the ends of the profiles (25a and 25b) in their upper part, which profiles are equipped with a hinge (26) attached to a rigid frame (27) so that the front and rear profiles (25a) are pivotable towards the longer sides of the slats (16a and 16b), and in the lower part of the profiles they have a lock (28) attached to the rigid frame (27) on the outer side in relation to the tray belt (2), furthermore the profile (25a) is equipped with an electromagnetic lock (23) attached to a rigid frame (27) below the tray belt (2), and the rear profile (25b) is equipped with a spring (29) attached to the frame (27) below the tray belt (2).
